# EUROPEAN PATENT SPECIFICATION

(11) **EP 4 447 762 B1**
(45) Date of publication and mention of the grant of the patent: **04.02.2026**
(21) Application number: 22840309.3
(22) Date of filing: 14.12.2022
(51) Int. Cl.: A47J 31/36

(54) **MACHINE FOR PREPARING AND EXTRACTING A HOT BEVERAGE**
MASCHINE ZUR ZUBEREITUNG UND EXTRAKTION EINES HEISSGETRÄNKS
MACHINE DE PRÉPARATION ET D'EXTRACTION DE BOISSON CHAUDE

(30) Priority: 17.12.2021 IT 202100031661
(43) Date of publication of application: 23.10.2024
(73) Proprietor: Gise Caffé S.r.l., 40041 Gaggio Montano (IT)
(72) Inventor: ACCURSI, Giovanni, 40046 Alto Reno Terme (Bologna) (IT)
(74) Representative: Bianciardi, Ezio
(86) International application number: PCT/IB2022/062204
(87) International publication number: WO 2023/111888

(56) References cited:
- EP-A1- 2 520 203
- AU-A1- 2012 201 622
- US-A1- 2010 224 077
- US-A1- 2016 309 945

## Description

### Technical field

This invention relates to a machine for preparing and extracting a hot beverage.

### Background art

The machine according to the invention is of the type using single capsules, preferably of the single-dose type, from which the hot beverage is extracted (such as coffee, tea, milk, camomile and similar beverages) by extracting the product with pressurised hot fluid.

The capsules used for this type of machine basically comprise a capsule body forming a chamber having a bottom and an opening of the capsule body delimited by an annular collar protruding transversally with respect to the body.

A dose of extraction product is housed in the chamber.

The opening of the capsule is sealed by a piece of film adherent to the annular collar.

The prior art machines using these capsules basically comprise:
- a load-bearing frame having an inlet opening for the capsule;
- a first fixed extraction unit positioned in the load-bearing frame and comprising a housing for the capsule and means for perforating and passage of the mixture, to obtain the extraction of the beverage, positioned on the bottom of the housing;
- a second movable extraction unit, positioned inside the frame, and movable inside the frame along a linear trajectory, in both directions, between a first non-operating end position away from the first fixed extraction unit (wherein the second movable extraction unit is positioned close to the inlet opening), and a second operating end position wherein the second movable extraction unit is moved towards the first fixed extraction unit in such a way as to move the capsule from an inlet position in the frame to a housing position in the first fixed unit for extracting the beverage by feeding a pressurised hot fluid.

Means for supporting the capsule are interposed between the movable extraction unit and the frame.

Usually, these supporting means may comprise a pair of protruding arms, positioned on both sides of the movable extraction unit, configured to retain the capsule entering (by falling) from the opening present on the frame. The pair of arms is configured to move along the frame synchronised with the movable extraction unit. These arms can move between a first operating position, with the ends of the arms positioned at a reciprocal reduced distance, for retaining the capsule (with the extraction unit movable in the first non-operating position), to a second non-operating position, wherein the ends of the arms are at a mutual distance greater than the previous distance so as to free the capsule at the housing of the capsule in the fixed dispensing extraction unit (with the movable extraction unit in the second operating position).

The movable extraction unit has a head provided with perforating elements which are able to perforate, according to a first solution, the sheet of film (if the capsule is inserted in the frame with the bottom facing towards the fixed extraction unit) or, according to a second solution, the perforating elements perforate the bottom of the capsule (if the capsule is inserted in the frame in the opposite direction to the previous one).

The head of the movable extraction unit is provided with ducts for the passage of the pressurised hot fluid to be introduced into the capsule after the capsule has been perforated.

The extraction of the beverage occurs by the combination given by the increase in the pressure inside the capsule supplied by the fluid entering and by the presence of the perforating means positioned on the bottom of the housing of the first fixed extraction unit which allow an opening in the capsule to be obtained for the passage of the beverage obtained from the product/fluid mixture towards the dispensing conduits of the extracted beverage made in the first fixed extraction unit.

The means for supporting the capsule, of particular interest for the invention, comprise the above-mentioned pair of arms interposed between the second movable extraction unit and the walls of the frame.

Each arm has a first end retained between the frame and the second movable extraction unit and configured for moving the arm between the first and second operating and non-operating positions and, at the same time, each end is pulled, by pushing/traction means made on the outer surface of the second movable extraction unit, for moving with the second movable extraction unit.

The free end of each arm is provided with a protrusion for retaining the capsule at a zone of its collar.

The protrusion is positioned transversal to the extension of the arm and defined by a pair of parallel tabs spaced from each other to define an area for coupling with the zone of the collar.

Solutions of arms of this type are known from US documents 2016/309945 and US 2010/224077. According to these solutions, the arms are provided with heads for constraining to cam surfaces obtained on the machine frame and are guided during the forward movement and withdrawal by means of horizontal pushing and pulling walls protruding transversally relative to the second movable extraction unit.

These structures for moving and controlling the positions which can be adopted by the two arms have several drawbacks.

The interposing of the ends of the arms between the surfaces of the frame and the surfaces of the second movable extraction unit may create, with use over time, a high level of wear of both the arms and the surfaces of the frame so as to worsen both the movement of the arms and their positioning precision with negative effects on the operation of the machine as a whole.

### Aim of the invention

The aim of this invention is to provide a machine for preparing and extracting a hot beverage that overcomes the above-mentioned drawbacks of the prior art.

In particular, the aim of the invention is to provide a machine for preparing and extracting a hot beverage which is able to obtain a high precision in positioning the arms together with a long service life.

A further aim of the invention is to provide a machine for preparing and extracting a hot beverage which is able to also obtain, with the same pair of arms, the final step of extracting and falling of the used capsule.

Said aims are fully achieved by the machine for preparing and extracting a hot beverage according to the invention as characterised in the appended claims.

### Brief description of the drawings

The main features of the invention will become more apparent from the following detailed description of a preferred, non-limiting embodiment, illustrated purely by way of example in the accompanying drawings, in which:
- Figure 1 is a perspective view, with some parts cut away to better illustrate others, of a machine for preparing and extracting a hot beverage according to the invention;
- Figure 2 is a top plan view of the machine of Figure 1;
- Figure 3 is a top plan view, with some parts in cross section and others cut away, of the machine of the preceding drawing in a configuration for receiving and supporting the capsule by supporting arms;
- Figure 4 is a top plan view, with some parts in cross section and others cut away, of the machine of the preceding drawing in a configuration of expulsion of a used capsule;
- Figures 5 and 6 show a second movable extraction unit of the machine of the preceding drawings with a pair of arms in a first operating position for supporting the capsule and, respectively, in a second operating position for releasing the capsule; Figure 5 is a top plan view and Figure 6 is a rear perspective view.

### Detailed description of preferred embodiments of the invention

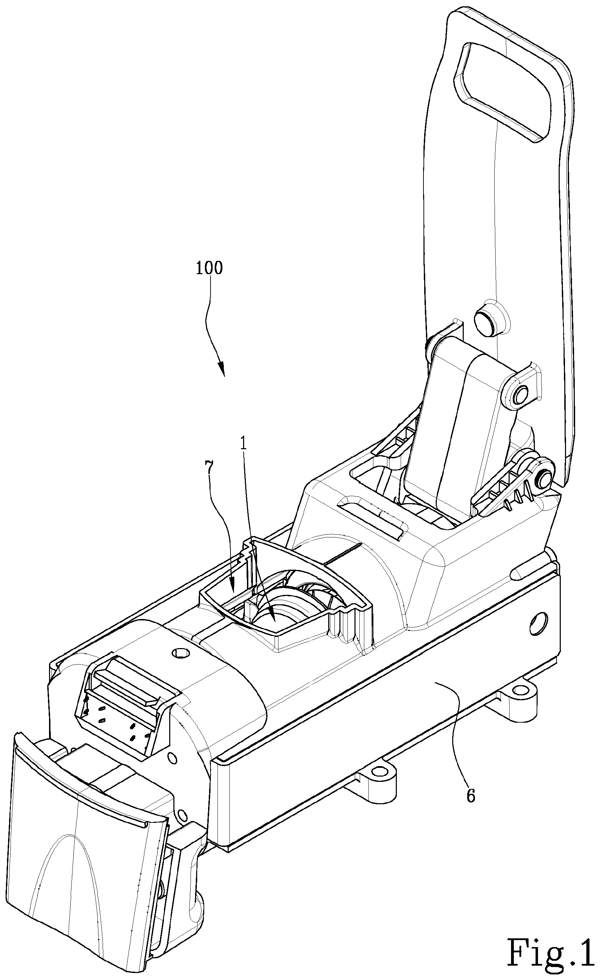

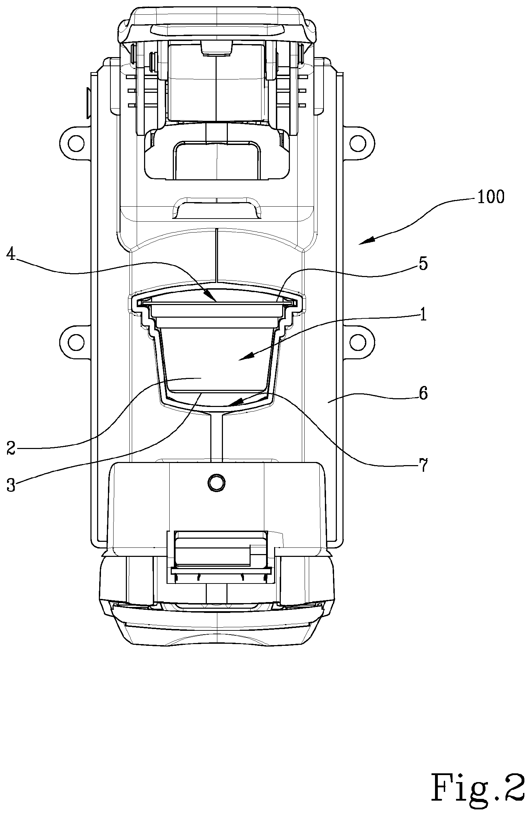

With reference to the accompanying drawings, in particular Figures 1 and 2, the machine according to the invention, labelled 100 in its entirety, is used with single capsules, preferably of the single-dose type, from which the hot beverage is extracted (such as coffee, tea, milk, camomile and similar beverages) by extracting the product with pressurised hot fluid. The capsule 1 which can be used in the machine 100 basically comprises a capsule body 2, forming a chamber, having a bottom 3 and an upper opening 4 delimited by an annular collar 5 protruding transversally relative to the capsule body 2.

A sheet for sealing the chamber (not illustrated) is positioned on the opening 4 and the collar 5.

The chamber houses at least one dose of product.

Figures 1 and 2 illustrate a part of the machine for preparing and extracting a hot beverage from the capsule 1, that is to say, the operating parts of relevance for the invention.

The machine 100 comprises a load-bearing frame 6 having an inlet opening 7 for the capsule 1.

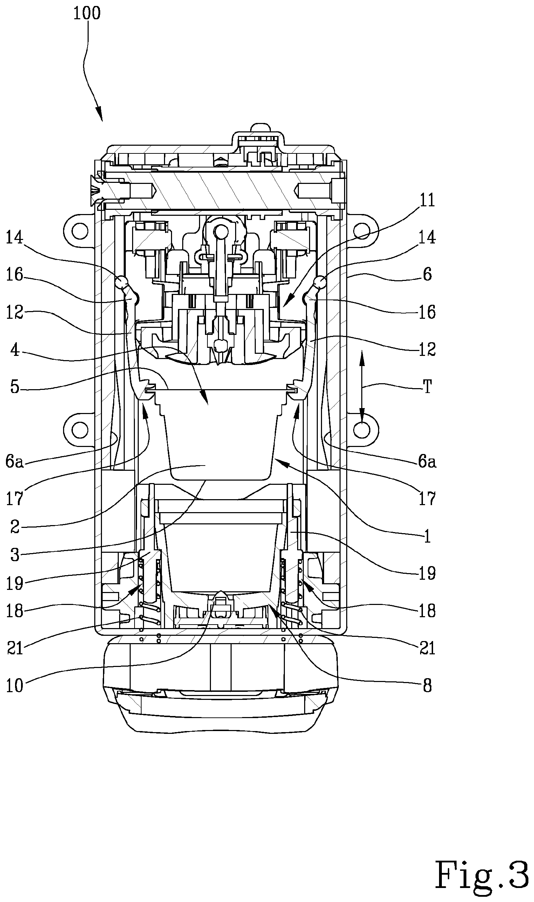

The frame 6 also comprises tracks 6a with cam profiles (see Figure 3).

Moreover, the machine 100 comprises a first fixed extraction unit 8 associated with the frame 6, comprising a matching housing 9 for the capsule 1 and means 10 for perforating and passage of the mixture, to obtain the extraction of the beverage.

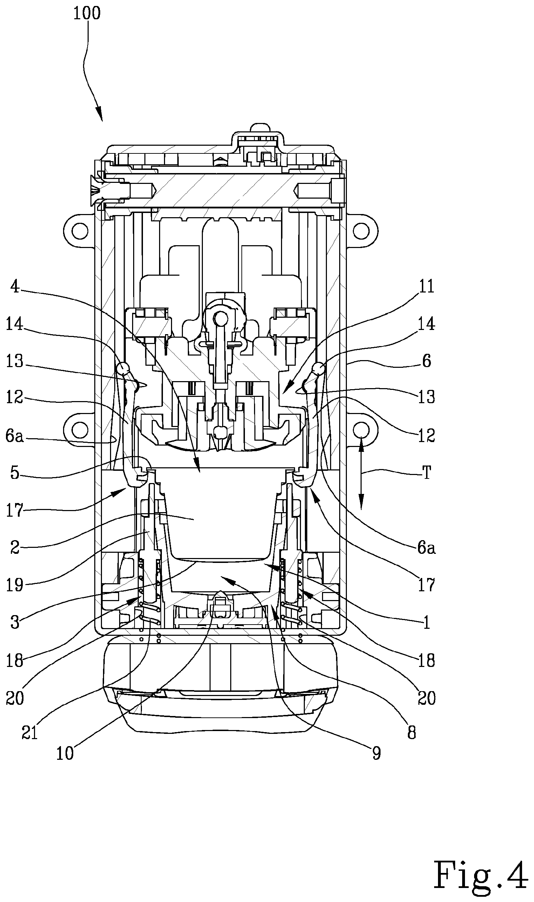

The machine 100 also comprises a second movable extraction unit 11, positioned inside the frame 6, and movable inside the frame 6 along a linear trajectory T, in both directions, between
- a first non-operating end position away from the first fixed extraction unit 8 (Figure 3), wherein the second movable extraction unit 11 is positioned close to the inlet opening 7, and
- a second operating end position (Figure 4) wherein the second movable extraction unit 11 is moved towards the first fixed extraction unit 8 in such a way as to move the capsule 1 from an inlet position to a position for insertion in the housing 9 of the first fixed unit 8 for extracting the beverage by feeding a pressurised hot fluid.

The machine 100 also comprises (see Figures 3 to 6) a pair of supporting arms 12 interposed between the second movable extraction unit 11 and the frame 6.

The pair of arms 12 is movable with the second movable extraction unit 11 and along the corresponding tracks 6a with cam profiles acting on the respective arms 12.

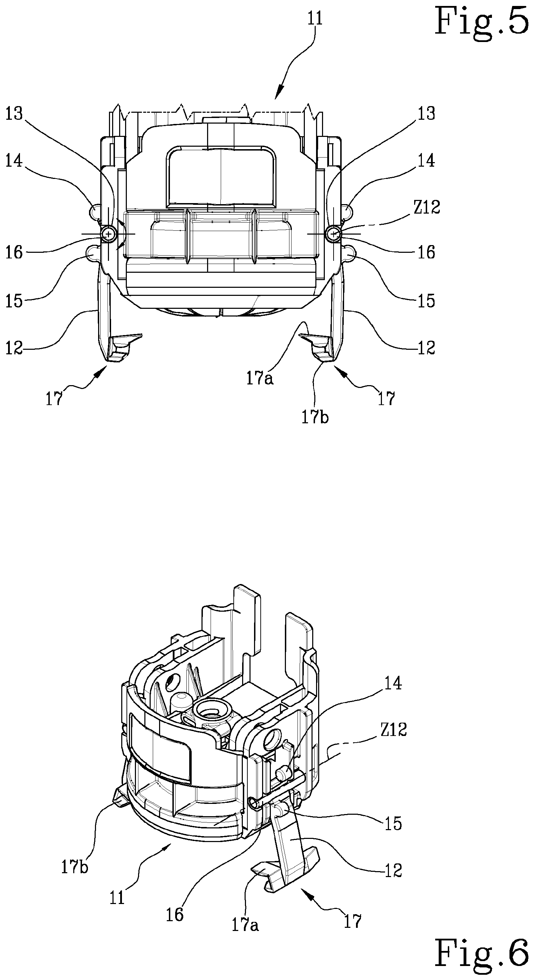

The cam profiles are made on the tracks 6a and are configured to allow the arms 12 to move from:
- a first close-together operating position configured to support the capsule 1 entering (Figures 3 and 5), in the first non-operating position of the second movable extraction unit 11, to
- a configuration for releasing from the capsule 1 (Figures 4 and 6), in a relative second far operating position, in the second operating position of the second movable extraction unit 11.

As illustrated (see Figures 3 to 6), each arm 12 is articulated, in a relative articulation zone, in a matching seat 13 made directly on the second movable extraction unit 11.

Each articulation zone of each arm 12 is provided with a pin 16 for constraining in the corresponding seat 13 in such a way as to define a pivot and rotation axis Z12 for the respective arm 12;
Each pin 16 is provided, on both sides, with two different contact heads 14, 15 protruding from the second movable extraction unit 11 and configured to interact, through their rotation about the axis Z12 with tracks 6a having cam profiles and made on the frame 6 to move each arm 12 between the first and second operating positions, and vice versa, during the movement of the second movable extraction unit 11.

In other words, each arm is pivoted directly to the second movable extraction unit and is provided with two "desmodromic" heads which are able to obtain the movement, by means of their rotation about the pivot axis, of the arms in the operating positions.

Preferably, each arm 12 has the articulation zone, located at one end of each arm 12, consisting of the pin 16 housed in the matching seat 13 (in this case and purely by way of an example U-shaped) formed in the second movable extraction unit 11.

In this way, each arm 12 can move only by means of a rotation about its axis Z12.

On both sides of the pin 16 there are the contact heads 14 and 15 which are angularly diverging from each other relative to the articulation pin 16, that is to say, axially spaced from each other from the pin 16 in such a way as to interact in the front in sliding contact with the cam tracks 6a.

In light of this, a first distal contact head 14 has a cylindrical shape obtained at the end of a lever made on the corresponding arm 12 for the front sliding contact with the cam tracks 6a.

The lever is inclined relative to the linear trajectory T in such a way as to allow the first contact head 14 to protrude towards the tracks 6a having the cam profiles.

In light of this, the second proximal contact head 15, has a cylindrical protruding shape made on the corresponding arm 12 and on the opposite side of the axis Z12 of articulation relative to the first contact head 14 and is configured to obtain the front sliding contact with the cam tracks 6a.

The first and second heads 14 and 15 are positioned at different heights relative to each other in such a way as to intercept different cam profiles obtained on tracks 6a superposed on each other.

Again as illustrated, each arm 12 has a free operating end provided with a fork 17 positioned transversally relative to the extension of the corresponding arm 12 and facing towards the other fork 17 of the other arm 12 and configured to support the capsule 1 at a relative zone defined by its collar 5 (see Figure 3).

It should be noted that a first branch 17a defining each fork 17 has a length greater than the length of the second branch 17b.

In light of this, the first longer branch 17a is configured to intercept a portion of the collar 5 of a used capsule 1, at the passage from the second far operating position to the first near operating position, in such a way as to allow a complete escape of the used capsule 1 from the housing 9 of the first fixed extraction unit 8 (see also Figure 4).

Preferably, the first fixed extraction unit 8 comprises a device 18 for aligning the capsule 1 entering and pre-expulsion of the used capsule 1 configured for:
- correctly aligning the capsule 1 entering the housing 9 and
- extracting at least partly the used capsule 1 from the housing 9 to allow, after the pre-expulsion, the intercepting of the collar 5 of the used capsule 1 by the supporting arms 12 to obtain a complete expulsion of the used capsule 1 from the housing 9, at the passage of the second movable extraction unit 11 from the second operating position to the first non-operating position.

It should be noted that the aligning and pre-expulsion device 18 comprises at least one element 19 movable parallel to the linear trajectory T of movement of the second extraction unit 11 movable between:
- a first advanced non-operating position waiting for the capsule 1 entering, wherein the element 19 protrudes from a seat 20 of the first fixed extraction unit 8;
- a second withdrawn position for aligning the capsule 1 entering, wherein the element 19 is housed inside the seat 20 of the first fixed extraction unit 8, at the housing of the capsule 1, that is to say, due to the pushing action of the capsule 1 inserted in the housing 9, and
- a further third advanced position, wherein the element 19 protrudes partly from the seat 20 of the first fixed extraction unit 8 which is able to pre-expel the used capsule 1.

Preferably, the aligning/pre-expulsion device 18 comprises two elements 19 positioned diametrically opposite each other along the housing (9) of the capsule 1 of the first fixed extraction unit 8 and configured to intercept, in two different points, the collar 5 of the capsule 1.

Each element 19 may consist of a rigid rod having the free head end configured for the spot contact with a zone of the collar of the capsule 1. Moreover, the aligning/pre-expulsion device 18 comprises an elastic element 21 interposed between one end of each element 19 and the bottom of the seat 20 in which the elastic element 19 is housed.

Each elastic element 21 is configured to keep the element 19 in the first advanced position in the absence of the capsule 1 in the housing 9 of the first fixed extraction unit 8 and to pre-expel the used capsule 1 in the third advanced position.

The machine structured in this way allows the capsule to be received from the infeed of the frame with support of the capsule on the forks of the arms (Figure 3).

At this point, the second movable extraction unit is moved towards the first fixed extraction unit until the capsule is completely inserted into the housing.

During the movement of the second unit, the arms are controlled by the heads interacting with the cam profiles of the tracks and, close to the first fixed extraction unit, the arms open to free the collar of the capsule and position itself outside the housing.

After extraction of the mixture or beverage, the second movable extraction unit starts a withdrawal movement, together with the arms, and away from the first fixed extraction unit.

After the withdrawal of the second movable extraction unit, there is a partial outlet of the capsule from the housing of the first fixed extraction unit which allows the branch of greater length of the fork of each arm (which is returning or has already partly returned to the first supporting position with the forks towards each other) to intercept the collar of the used capsule and pull it towards a discharge chamber (not illustrated) of the used capsules.

It should be noted that, during housing of the capsule, the aligning /pre-extraction elements intercept frontally two different zones of the collar of the capsule (so as to allow correct centring of the capsule in the housing) and withdraw inside their seat in the first unit with relative compression of the respective elastic element.

Moreover, during the moving away of the second movable extraction unit the aligning/pre-extraction elements, under the action of the elastic element, push on the collar of the used capsule to allow a pre-expulsion of the used capsule to allow a correct intercepting of the collar of the used capsule by the branches of greater length of the forks of the arms.

The preset aims are achieved with a machine structured in this way thanks to the system for articulation of the arms directly on the second unit, the presence of control cam follower heads which are able to control the arms with extreme precision and reducing the friction in combination with cam tracks made on the frame.

This structure of the arms, combined with the positioning/pre-extraction elements, guarantees a correct discharge of the used capsules.

All these functions listed above are obtained with limited operating components on the machine and with extremely reliable and precise construction structures.

## Claims

1. A machine for preparing and extracting a hot beverage from a capsule (1); the machine (100) comprising:
- a load-bearing frame (6) having an inlet opening (7) for the capsule (1);
- a first fixed extraction unit (8) associated with the frame (6) and comprising a matching housing (9) for the capsule (1) and configured to obtain the extraction of the beverage;
- a second movable extraction unit (11), positioned inside the frame (6), and movable inside the frame (6) along a linear trajectory (T), in both directions, between a first non-operating wherein the second movable extraction unit (11) is positioned close to the inlet opening (7), and a second operating end position wherein the second movable extraction unit (11) is moved towards the first fixed extraction unit (8) to move the capsule inside the housing (9);
- a pair of supporting arms (12) interposed between the second movable extraction unit (11) and the frame (6); said pair of arms (12) being movable with the second movable extraction unit (11) and along the frame (6) in such a way as to move from a first near operating end position and configured to support the capsule (1) entering, in the first non-operating position of the second movable extraction unit (11), to a released configuration from the capsule (1), in a relative second far operating end position, in the second operating position of the second movable extraction unit (11); **characterised in that** each arm (12) is articulated, in a relative articulation zone, in a matching seat (13) made directly on the second movable extraction unit (11); each articulation zone being provided with a pin (16) for constraining in the corresponding seat (13) in such a way as to define a pivot and rotation axis (Z12) for the respective arm (12); each pin (16) being provided, bilaterally, with two different contact heads (14, 15) protruding from the second movable extraction unit (11) and configured to interact, through tear rotation about the axis (Z12), with tracks (6a) having cam profiles and made on the frame (6) to move each arm (12) between the first and second operating positions, and vice versa, during the movement of the second movable extraction unit (11).

2. The machine according to claim 1, wherein each arm (12) has the articulation zone, located at one end of each arm (12), comprising a pin (16) housed in the seat (13) of the second movable extraction unit (11); on both sides of the pin (16) there are the contact heads (14, 15) which are angularly diverging from each other relative to the articulation pin (16), that is to say, axially spaced from each other from the pin (16) in such a way as to interact in the front in sliding contact with the cam tracks (6a).

3. The machine according to any one of the preceding claims, wherein a first distal contact head (14) has a cylindrical shape obtained at the end of a lever made on the corresponding arm (12); the lever being inclined relative to the linear trajectory (T) in such a way as to allow the first contact head (14) to protrude towards the tracks (6a) having the cam profiles.

4. The machine according to any one of the preceding claims, wherein a second proximal contact head (15) has a cylindrical projecting shape made directly on the corresponding arm (12) and on the opposite side of the axis (Z12) of articulation relative to the first contact head (14).

5. The machine according to any one of the preceding claims, wherein each arm (12) has a free operating end provided with a fork (17) positioned transversally relative to the extension of the corresponding arm (12) and facing towards the other fork (17) of the other arm (12) and configured to support the capsule (1) at a relative area defined by a collar (5) of the capsule (1).

6. The machine according to claim 5, wherein a first branch (17a) defining the fork (17) has a length greater than the length of the second branch (17b); the first longer branch (17a) being configured to intercept a portion of the collar (5) of a used capsule (1), at the passage from the second far operating position to the first near operating position, in such a way as to allow a complete escape of the used capsule (1) from the housing (9) of the first fixed extraction unit (8).

7. The machine according to any one of the preceding claims, wherein the first fixed extraction unit (8) comprises a device (18) for aligning the capsule (1) entering and pre-expulsion of a used capsule (1) configured, respectively, to align the incoming capsule (1) and to ensure an at least partial extraction of the used capsule (1) from the housing (9) and in such a way as to allow, after pre-expulsion, interception of a collar (5) of the used capsule (1) by the supporting arms (12) to obtain a complete expulsion of the used capsule (1) from the housing (9), at the passage of the second movable extraction unit (11) from the second operating position to the first non-operating position.

8. The machine according to claim 7, wherein the pre-expulsion device (18) comprises at least one element (19) movable parallel to the linear trajectory (T) of movement of the second movable extraction unit (11) between:
- a first advanced non-operating position waiting for the capsule (1) entering, wherein the element (19) protrudes from a seat (20) of the first fixed extraction unit (8);
- a second withdrawn position for aligning the capsule (1) entering, wherein the element (19) is housed inside the seat (20) of the first fixed extraction unit (8), at the housing of the capsule (1), that is to say, due to the pushing action of the capsule (1) inserted in the housing (9), and
- a further third advanced position, wherein the element (19) protrudes partly from the seat (20) of the first fixed extraction unit (8) which is able to pre-expel the used capsule (1).

9. The machine according to claim 7 or 8, wherein the aligning/pre-expulsion device (18) comprises two elements (19) positioned diametrically opposite each other along the housing (9) of the capsule (1) of the first fixed extraction unit (8) and configured to intercept, in two different points, the used capsule (1).

10. The machine according to any one of claims 8 to 9, wherein the aligning/pre-expulsion device (18) comprises an elastic element (21) interposed between one end of each element (19) and the bottom of the seat (20) in which the elastic element (19) is housed; each elastic element (21) being configured to keep the element (19) in the first advanced position in the absence of the capsule (1) in the housing (9) of the first fixed extraction unit (8) and to pre-expel the used capsule (1) in the third advanced position.

## Patentansprüche

1. Maschine zur Zubereitung und Extraktion eines Heißgetränks aus einer Kapsel (1), wobei die Maschine (100) Folgendes umfasst:
- einen lasttragenden Rahmen (6), aufweisend eine Einlassöffnung (7) für die Kapsel (1);
- eine erste fixe Extraktionseinheit (8), die mit dem Rahmen (6) assoziiert ist und eine passende Einhausung (9) für die Kapsel (1) umfasst und ausgelegt ist, um die Extraktion des Getränks zu erhalten;
- eine zweite bewegbare Extraktionseinheit (11), die innerhalb des Rahmens (6) positioniert und innerhalb des Rahmens (6) entlang einer linearen Bahn (T) in beide Richtungen zwischen einer ersten Nichtbetriebsendposition, in der die zweite bewegbare Extraktionseinheit (11) nah an der Einlassöffnung (7) positioniert ist, und einer zweiten Betriebsendposition, in der die zweite bewegbare Extraktionseinheit (11) hinführend zu der ersten fixen Extraktionseinheit (8) bewegt wird, um die Kapsel innerhalb der Einhausung (9) zu bewegen, bewegbar ist;
- ein Paar Stützarme (12), die zwischen der zweiten bewegbaren Extraktionseinheit (11) und dem Rahmen (6) bewegbar sind, wobei das Paar Arme (12) mit der zweiten bewegbaren Extraktionseinheit (11) und entlang des Rahmens (6) derart bewegbar ist, dass es sich von einer ersten nahen Betriebsendposition, die ausgelegt ist, um die eintretende Kapsel (1) zu stützen, in der ersten Nichtbetriebsposition der zweiten bewegbaren Extraktionseinheit (11) in eine von der Kapsel (1) freigegebene Auslegung in einer relativen zweiten entfernten Betriebsendposition in der zweiten Betriebsposition der zweiten bewegbaren Extraktionseinheit (11) bewegt, **dadurch gekennzeichnet, dass** ein jeder Arm (12) in einer jeweiligen Gelenkzone in einem passenden Sitz (13), der direkt auf der zweiten bewegbaren Extraktionseinheit (11) ausgebildet ist, gelenkig ist, wobei eine jede Gelenkzone mit einem Zapfen (16) zum Befestigen in dem entsprechenden Sitz (13) versehen ist, sodass eine Schwenk- und Rotationsachse (Z12) für den jeweiligen Arm (12) definiert wird, wobei ein jeder Zapfen (16) beidseitig mit zwei unterschiedlichen Kontaktköpfen (14, 15) versehen ist, die aus der zweiten bewegbaren Extraktionseinheit (11) hervorstehen und ausgelegt sind, um durch ihre Drehung um die Achse (Z12) mit Bahnen (6a) zu interagieren, die Nockenprofile aufweisen und auf dem Rahmen (6) ausgebildet sind, um einen jeden Arm (12) zwischen der ersten und zweiten Betriebsposition und umgekehrt während der Bewegung der zweiten bewegbaren Extraktionseinheit (11) zu bewegen.

2. Maschine nach Anspruch 1, wobei die Gelenkzone eines jeden Arms (12) an einem Ende eines jeden Arms (12) befindlich ist, umfassend einen Zapfen (16), der in dem Sitz (13) der zweiten bewegbaren Extraktionseinheit (11) untergebracht ist, wobei auf beiden Seiten des Zapfens (16) Kontaktköpfe (14, 15) bereitgestellt sind, die winkelig relativ zu dem Gelenkzapfen (16) auseinanderlaufen, d. h. axial voneinander von dem Zapfen (16) beabstandet sind, sodass sie frontal in Gleitkontakt mit den Nockenbahnen (6a) interagieren.

3. Maschine nach einem der vorhergehenden Ansprüche, wobei ein erster distaler Kontaktkopf (14) eine zylindrische Form aufweist, die an dem Ende eines auf dem entsprechenden Arm (12) ausgebildeten Hebels erhalten ist, wobei der Hebel relativ zu der linearen Bahn (T) geneigt ist, sodass dem ersten Kontaktkopf (14) erlaubt wird, hinführend zu den Bahnen (6a), aufweisend die Nockenprofile, hervorzustehen.

4. Maschine nach einem der vorhergehenden Ansprüche, wobei ein zweiter proximaler Kontaktkopf (15) eine vorspringende zylindrische Form aufweist, die direkt auf dem entsprechenden Arm (12) und auf der entgegengesetzten Seite der Gelenkachse (Z12) relativ zum ersten Kontaktkopf (14) ausgebildet ist.

5. Maschine nach einem der vorhergehenden Ansprüche, wobei ein jeder Arm (12) ein freies Betriebsende aufweist, das mit einer Gabel (17) versehen ist, die quer relativ zur Ausdehnung des entsprechenden Arms (12) positioniert und der anderen Gabel (17) des anderen Arms (12) zugewandt und ausgelegt ist, um die Kapsel (1) an einem relativen Bereich, der durch einen Bund (5) der Kapsel (1) definiert ist, zu stützen.

6. Maschine nach Anspruch 5, wobei ein erster Abzweig (17a), der die Gabel (17) definiert, eine Länge aufweist, die größer ist als die Länge des zweiten Abzweigs (17b), wobei der erste längere Abzweig (17a) ausgelegt ist, um einen Abschnitt des Bunds (5) einer gebrauchten Kapsel (1) beim Übergang von der zweiten entfernten Betriebsposition in die erste nahe Betriebsposition abzufangen, sodass ein komplettes Austreten der gebrauchten Kapsel (1) aus der Einhausung (9) der ersten fixen Extraktionseinheit (8) erlaubt wird.

7. Maschine nach einem der vorhergehenden Ansprüche, wobei die erste fixe Extraktionseinheit (8) eine Vorrichtung (18) zum Ausrichten der eintretenden Kapsel (1) und zum Vorausstoßen einer gebrauchten Kapsel (1) umfasst, die jeweils ausgelegt ist, um die eingehende Kapsel (1) auszurichten und eine zumindest teilweise Extraktion der gebrauchten Kapsel (1) aus der Einhausung (9) zu gewährleisten, und derart, dass nach dem Vorausstoßen das Abfangen eines Bunds (5) der gebrauchten Kapsel (1) durch die Stützarme (12) erlaubt wird, um einen kompletten Ausstoß der gebrauchten Kapsel (1) aus der Einhausung (9) beim Übergang der zweiten bewegbaren Extraktionseinheit (11) von der zweiten Betriebsposition in die erste Nichtbetriebsposition zu erhalten.

8. Maschine nach Anspruch 7, wobei die Vorausstoßvorrichtung (18) mindestens ein Element (19) umfasst, das parallel zu der linearen Bewegungsbahn (T) der zweiten bewegbaren Extraktionseinheit (11) bewegbar ist zwischen:
- einer ersten vorgeschobenen Nichtbetriebsposition in Erwartung der eintretenden Kapsel (1), wobei das Element (19) aus einem Sitz (20) der ersten fixen Extraktionseinheit (8) hervorsteht;
- einer zweiten zurückgezogenen Position zum Ausrichten der eintretenden Kapsel (1), wobei das Element (19) innerhalb des Sitzes (20) der ersten fixen Extraktionseinheit (8) an der Einhausung der Kapsel (1) untergebracht ist, d. h. aufgrund der Schubwirkung der in die Einhausung (9) eingefügten Kapsel (1), und
- einer weiteren dritten vorgeschobenen Position, in der das Element (19) teilweise aus dem Sitz (20) der ersten fixen Extraktionseinheit (8) hervorsteht, die in der Lage ist, die gebrauchte Kapsel (1) vorauszustoßen.

9. Maschine nach Anspruch 7 oder 8, wobei die Ausrichtungs-/Vorausstoßvorrichtung (18) zwei Elemente (19) umfasst, die diametral einander entgegengesetzt entlang der Einhausung (9) der Kapsel (1) der ersten fixen Extraktionseinheit (8) positioniert und ausgelegt sind, um die gebrauchte Kapsel (1) an zwei verschiedenen Punkten abzufangen.

10. Maschine nach einem der Ansprüche 8 bis 9, wobei die Ausrichtungs-/Vorausstoßvorrichtung (18) ein elastisches Element (21) umfasst, das zwischen einem Ende eines jeden Elements (19) und der Unterseite des Sitzes (20), in dem das elastische Element (19) untergebracht ist, eingesetzt ist, wobei ein jedes elastische Element (21) ausgelegt ist, um das Element (19) in der ersten vorgeschobenen Position in Abwesenheit der Kapsel (1) in der Einhausung (9) der ersten fixen Extraktionseinheit (8) zu halten und die gebrachte Kapsel (1) in der dritten vorgeschobenen Position vorauszustoßen.

## Revendications

1. Machine de préparation et d'extraction de boisson chaude à partir d'une capsule (1) ; la machine (100) comprenant :
- un châssis porteur (6) ayant une ouverture d'entrée (7) pour la capsule (1) ;
- une première unité d'extraction fixe (8) associée au châssis (6) et comprenant un logement correspondant (9) pour la capsule (1) et configuré pour obtenir l'extraction de la boisson ;
- une seconde unité d'extraction mobile (11), positionnée à l'intérieur du châssis (6), et mobile à l'intérieur du châssis (6) le long d'une trajectoire linéaire (T), dans les deux directions, entre une première position de non-fonctionnement dans laquelle la seconde unité d'extraction mobile (11) est positionnée à proximité de l'ouverture d'entrée (7), et une seconde position finale de fonctionnement dans laquelle la seconde unité d'extraction mobile (11) est déplacée vers la première unité d'extraction fixe (8) pour déplacer la capsule à l'intérieur du logement (9) ;
- une paire de bras de support (12) interposés entre la seconde unité d'extraction mobile (11) et le châssis (6) ; ladite paire de bras (12) étant mobile avec la seconde unité d'extraction mobile (11) et le long du châssis (6) de manière à se déplacer d'une première position d'extrémité de fonctionnement proche et configurée pour supporter la capsule (1) lors de son insertion, dans la première position de non-fonctionnement de la seconde unité d'extraction mobile (11), à une configuration libérée de la capsule (1), dans une seconde position d'extrémité de fonctionnement éloignée relative, dans la seconde position de fonctionnement de la deuxième unité d'extraction mobile (11) ; **caractérisée en ce que** chaque bras (12) est articulé, dans une zone d'articulation relative, dans un siège correspondant (13) réalisé directement sur la deuxième unité d'extraction mobile (11) ; chaque zone d'articulation étant pourvue d'un axe (16) pour contraindre dans le siège correspondant (13) de manière à définir un axe de pivotement et de rotation (Z12) pour le bras respectif (12) ; chaque axe (16) étant pourvu, bilatéralement, de deux têtes de contact différentes (14, 15) faisant saillie de la seconde unité d'extraction mobile (11) et configurée pour interagir, par leur rotation autour de l'axe (Z12), avec des pistes (6a) ayant des profilés de came et réalisées sur le châssis (6) pour déplacer chaque bras (12) entre les première et seconde positions de fonctionnement, et vice versa, pendant le mouvement de la seconde unité d'extraction mobile (11).

2. Machine selon la revendication 1, dans laquelle chaque bras (12) a la zone d'articulation située à une extrémité de chaque bras (12), comprenant un axe (16) logé dans le siège (13) de la seconde unité d'extraction mobile (11) ; des deux côtés de l'axe (16) il y a les têtes de contact (14, 15) qui divergent angulairement l'une de l'autre par rapport à l'axe d'articulation (16), c'est-à-dire espacées axialement l'une de l'autre de l'axe (16) de manière à interagir à l'avant en contact coulissant avec les pistes de came (6a).

3. Machine selon l'une quelconque des revendications précédentes, dans laquelle une première tête de contact distale (14) a une forme cylindrique obtenue à l'extrémité d'un levier réalisé sur le bras correspondant (12) ; le levier étant incliné par rapport à la trajectoire linéaire (T) de manière à permettre à la première tête de contact (14) de faire saillie vers les pistes (6a) ayant les profilés de came.

4. Machine selon l'une quelconque des revendications précédentes, dans laquelle une seconde tête de contact proximale (15) a une forme cylindrique saillante réalisée directement sur le bras correspondant (12) et sur le côté opposé de l'axe (Z12) d'articulation par rapport à la première tête de contact (14).

5. Machine selon l'une quelconque des revendications précédentes, dans laquelle chaque bras (12) a une extrémité de fonctionnement libre pourvue d'une fourche (17) positionnée transversalement par rapport à l'extension du bras correspondant (12) et tournée vers l'autre fourche (17) de l'autre bras (12) et configurée pour supporter la capsule (1) au niveau d'une zone relative définie par un collier (5) de la capsule (1).

6. Machine selon la revendication 5, dans laquelle une première branche (17a) définissant la fourche (17) a une longueur supérieure à la longueur de la seconde branche (17b) ; la première branche plus longue (17a) étant configurée pour intercepter une portion du collier (5) d'une capsule usagée (1), au passage de la seconde position de fonctionnement éloignée à la première position de fonctionnement proche, de manière à permettre un échappement complet de la capsule usagée (1) du logement (9) de la première unité d'extraction fixe (8).

7. Machine selon l'une quelconque des revendications précédentes, dans laquelle la première unité d'extraction fixe (8) comprend un dispositif (18) d'alignement de la capsule (1) lors de son insertion et de pré-expulsion d'une capsule usagée (1) configuré, respectivement, pour aligner la capsule entrante (1) et pour assurer une extraction au moins partielle de la capsule usagée (1) du logement (9) et de manière à permettre, après pré-expulsion, l'interception d'un collier (5) de la capsule usagée (1) par les bras de support (12) pour obtenir une expulsion complète de la capsule usagée (1) du logement (9), au passage de la seconde unité d'extraction mobile (11) de la seconde position de fonctionnement à la première position de non-fonctionnement.

8. Machine selon la revendication 7, dans laquelle le dispositif de pré-expulsion (18) comprend au moins un élément (19) mobile parallèlement à la trajectoire linéaire (T) de mouvement de la seconde unité d'extraction mobile (11) entre :
- une première position avancée de non-fonctionnement attendant la capsule (1) lors de son insertion, dans laquelle l'élément (19) fait saillie d'un siège (20) de la première unité fixe d'extraction (8) ;
- une deuxième position rétractée pour aligner la capsule (1) lors de son insertion, dans laquelle l'élément (19) est logé à l'intérieur du siège (20) de la première unité d'extraction fixe (8), au niveau du logement de la capsule (1), c'est-à-dire en raison de l'action de poussée de la capsule (1) insérée dans le logement (9), et
- une troisième position avancée supplémentaire, dans laquelle l'élément (19) fait partiellement saillie du siège (20) de la première unité d'extraction fixe (8) qui est capable de pré-expulser la capsule usagée (1).

9. Machine selon la revendication 7 ou 8, dans laquelle le dispositif d'alignement/pré-expulsion (18) comprend deux éléments (19) positionnés diamétralement opposés l'un à l'autre le long du logement (9) de la capsule (1) de la première unité d'extraction fixe (8) et configurés pour intercepter, en deux points différents, la capsule usagée (1).

10. Machine selon l'une quelconque des revendications 8 à 9, dans laquelle le dispositif d'alignement/pré-expulsion (18) comprend un élément élastique (21) interposé entre une extrémité de chaque élément (19) et le fond du siège (20) dans lequel l'élément élastique (19) est logé ; chaque élément élastique (21) étant configuré pour maintenir l'élément (19) dans la première position avancée en l'absence de la capsule (1) dans le logement (9) de la première unité d'extraction fixe (8) et pour pré-expulser la capsule usagée (1) dans la troisième position avancée.
